Europäisches Patentamt

European Patent Office

Office européen des brevets

(11) Publication number: **0 510 204 A1**

## EUROPEAN PATENT APPLICATION
### published in accordance with Art. 158(3) EPC

(21) Application number: **91918935.7**

(22) Date of filing: **30.10.91**

(86) International application number:
**PCT/JP91/01485**

(87) International publication number:
**WO 92/09021 (29.05.92 92/12)**

(51) Int. Cl.⁵: **G05B 19/405**

(30) Priority: **08.11.90 JP 303099/90**

(43) Date of publication of application:
**28.10.92 Bulletin 92/44**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **SASAKI, Takao**
**14-4-504, Minamiosawa 3-chome**
**Hachioji-shi, Tokyo 192-03(JP)**

Inventor: **OTSUKI, Toshiaki**
**868-3, Kurami, Nishikatsura-machi**
**Minamitsuru-gun, Yamanashi 403(JP)**
Inventor: **SAITO, Yasuhiro, Fanuc Dai-3**
**Vira-karamatsu**
**3527-1, Shibokusa, Oshino-mura**
**Minamitsuru-gun, Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **METHOD OF EVALUATING OPERATING ACCURACY IN NUMERICALLY CONTROLLED MACHINE.**

(57) A method of evaluating an accuracy in which an operating accuracy of a machine can be easily evaluated on the side of a numerically controlled system without using a special measuring device. For example, during execution of a circular arc processing program (14a) for evaluating an accuracy by the processor (11) of a numerically controlled system (10) with numerically controlled machine (30) idly operated, machine operating positions in directions of an X-axis and a Y-axis are periodically measured in response to position feedback signals output from pulse coders provided on servo motors of the X-axis and the Y-axis of a machine tool, and stored in a memory (13). Upon completion of the execution of the program, a radius of an operating path and an error with respect to a specified radius on the X-Y plane of the machine tool are calculated by the processor based on the measured positions in the directions of the X-axis and the Y-axis. The machine operating path is displayed on the display unit (16a) together with the specified path and allowable external and internal paths for the accuracy evaluation by the operator in accordance with image signals produced by a graphic control circuit (16) based on the calculated path or the calculated radius error, the radius specified by the program and allowable upper and lower limit radii.

EP 0 510 204 A1

FIG. 3

2

Detailed Description of the Invention

[Industrial Field of Utilization]

This invention relates to an accuracy evaluation method for a numerical control device, and more particularly, to an accuracy evaluation method for a numerical control device which is able to evaluate a machining accuracy before a workpiece is actually machined.

[Prior Art]

The machining accuracy of machine tools is evaluated while a machine tool connected to a numerical control device is actually operated for machining a workpiece. When a machine tool is operated in accordance with commands from a numerical control device, a numerically controlled servomotor always follows the commands with a certain delay, and such a delay causes a machining error.

To reduce the machining error, a series of processes must be repeated, i.e., a machining error is evaluated by measuring a machined product, parameters of the numerical control device or machine tool is adjusted in accordance with the result of the evaluation, and the machine tool is then operated in accordance with commands from the numerical control device, to carry out again an evaluation of the machining error.

[Problems That the Invention is to Solve]

In the conventional accuracy evaluation method described above, the measurement of the machined product requires skill and consumes labor. Further, since a workpiece is actually machined, more workpieces are wasted as the number of machining operations increases.

To evaluate the machining error of a machine tool without actually machining a workpiece, an error measuring instrument, e.g., a double ball bar (DBB) unit which is mounted to the machine tool for measurement, may be used. However, mounting the DBB unit to a machine also requires considerable skill, and a disadvantage arises in that a special measuring instrument, i.e., the DBB unit, must be used.

This invention was created in view of the above circumstances, and an object thereof is to provide an accuracy evaluation method for a numerical control device by which a machining accuracy can be easily evaluated while carrying out a machining operation or a dry run operation, without using a special device.

[Means of Solving the Problems]

To achieve the above object, this invention provides an accuracy evaluation method for a numerical control device which is executed to minimize an error of a machining operation of a machine in accordance with a numerical control command, the method being characterized by comprising: supplying a numerical control command to a machine tool connected to the numerical control device; obtaining a machine position in accordance with a feedback signal from the machine tool; obtaining an error between the machine position and a machine position specified by the numerical control command; and evaluating an accuracy with respect to the numerical control command from the numerical control device.

[Operation]

The numerical control device is supplied with a feedback signal from, e.g., a servo circuit, at regular intervals, and obtains a machine position corresponding to an actual machining operation through a signal integration, to derive an error with respect to a specified machine position. Thus, an error in the machine position can be measured by the numerical control device, and accordingly, no special device or skill is required.

[Embodiments]

An embodiment of this invention will be described with reference to the drawings.

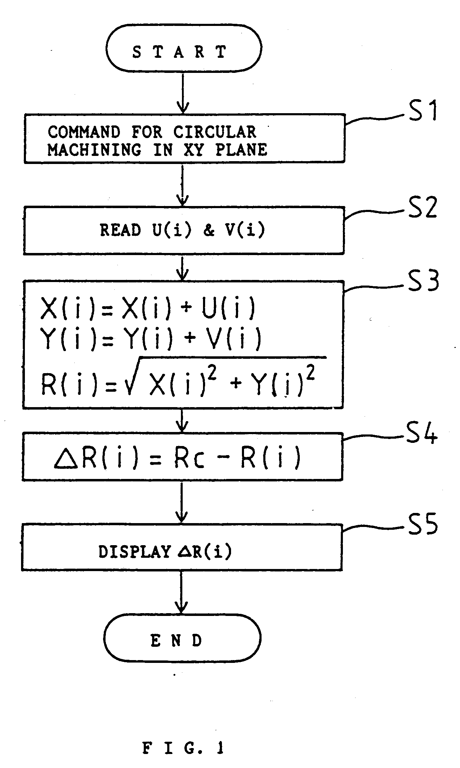

FIG. 1 is a flowchart showing an example of an error calculation process. In the figure, numbers following "S" represent step numbers.

[S1] An evaluation program is executed and a circular machining in an X-Y plane is commanded.

[S2] Feedback pulses U(i) and V(i) per unit time related to X and Y axes are read from servo circuits.

[S3] Positions X(i) and Y(i) along the X and Y axes are obtained from the data read in Step S2, and a radius R(i) is calculated from the obtained values.

[S4] A difference between the radius R(i) obtained based on an actual machining and a command radius Rc, i.e., a radial error $\Delta R(i)$, is obtained.

[S5] The radial error $\Delta R(i)$ obtained in Step S4 is graphically displayed on a display screen for an operator's observation. Viewing the graphic representation, the operator evaluates the error, and thus can determine kinds and amounts of parameters to be modified.

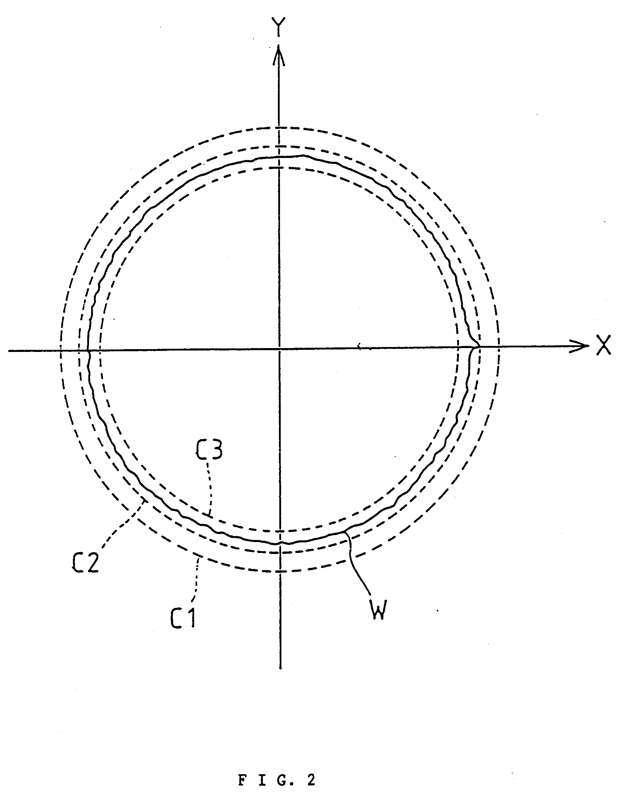

FIG. 2 shows an example of a radial error display obtained by the aforementioned roundness measurement.

Of the three circles indicated by dotted lines, the middle circle C2 represents a commanded shape. An actual machined path W is drawn by a solid line, and the drawing scale is increased in the radius direction. The circles C1 and C3 outside and inside the commanded shape are drawn as criteria for the evaluation of an error.

In accordance with the error displayed on the screen, the operator adjusts position gains of the X and Y axes and backlash amounts, for example.

A rough adjustment is carried out based on the displayed error, while operating a machine tool in a dry run mode with a workpiece removed from the machine tool. When carrying out a fine adjustment thereafter, the error is evaluated by actually machining a workpiece. Thus, when adjusting the parameters, the error is displayed on a scale suited for the adjustment, and therefore, the accuracy evaluation can be easily and efficiently carried out. To evaluate the accuracy, the distribution of errors or the locations of errors may be utilized.

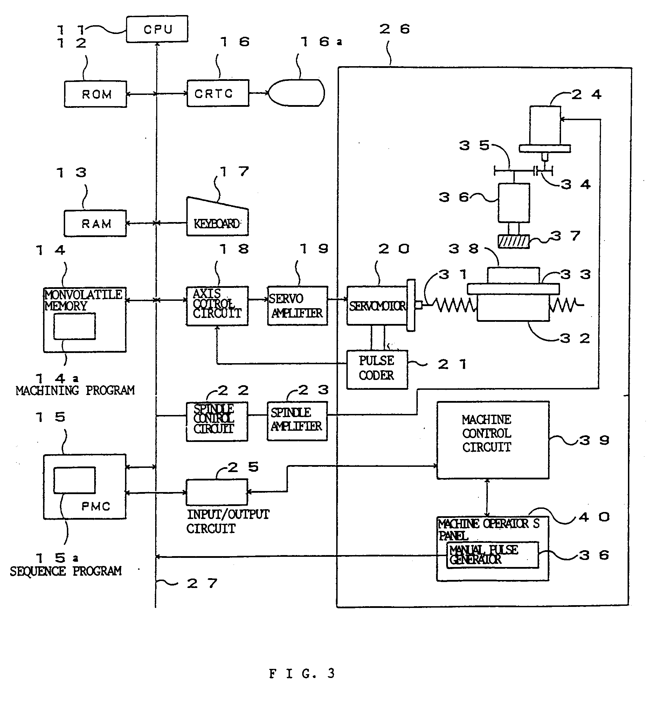

FIG. 3 is a block diagram of hardware of a numerical control device (CNC) for carrying out this invention. A processor 11 globally controls the numerical control device in accordance with a system program stored in a ROM 12. An EPROM or EEPROM is used for the ROM 12. A RAM 13, which is an SRAM, stores various data such as the results of calculations of the positions X(i) and Y(i) along the X and Y axes, the radial error $\Delta R(i)$, etc. A nonvolatile memory 14 stores a machining program 14a, adjusted parameters, as program for the accuracy evaluation, e.g., a circular machining program, and the like. A CMOS backed up by a battery, for example, is used for the nonvolatile memory 14, and therefore, the contents thereof is retained even after the power supply to the numerical control device is cut off.

A PMC (programmable machine controller) 15 is supplied with commands such as M, S and T functions, decodes the commands in accordance with a sequence program 15a, and outputs signals for controlling a machine tool. The PMC 15 is also supplied with limit switch signals from a machine control circuit and switch signals from a machine operator's panel, processes the signals in accordance with the sequence program 15a, and outputs signals for controlling the machine side. Those signals which are required by the numerical control device are transferred to the RAM through a bus 27 and read by the processor 11.

A graphic control circuit 16 graphically displays data to be shown to the operator, such as the radial error $\Delta R(i)$, at a display device 16a. Namely, data stored in the RAM 13, e.g., current positions and amounts of displacement of individual axes, are converted into image signals, and the converted signals are supplied to the display device 16a to be displayed thereat. A CRT or liquid-crystal display device is used for the display device 16a. A keyboard 17 is used for an input of various data.

An axis control circuit 18 is supplied with a position command from the processor 11, and outputs a speed command signal to a servo amplifier 19 to control a servomotor 20. The servo amplifier 19 amplifies the speed command signal, and drives the servomotor 20. A pulse coder 21 for generating a position feedback signal is mounted to the servomotor 20, and the position feedback signal from the pulse coder 21 is fed back to the axis control circuit 18. A position detector such as a linear scale may be used for the pulse coder 21. These elements are provided for each of the axes, but only those associated with one axis are illustrated because the arrangement is identical.

A spindle control circuit 22 supplies a command signal to a spindle amplifier 23 to rotate a spindle motor 24 at a commanded rotational speed.

An input/output circuit 25 carries out a transfer of input/output signals with respect to a machine 26. Namely, limit switch signals from a machine control circuit 39 and switch signals from the machine operator's panel are transferred to the PMC 15 and read thereby. Further, signals output from the PMC 15 for controlling a pneumatic actuator etc. on the machine side are transferred to the machine side.

A manual pulse generator 36 generates a pulse train for a fine movement of the individual axes in accordance with a rotational angle command, to thereby precisely position the machine. The manual pulse generator 36 is incorporated in the machine operator's panel 40.

The servomotor 20 rotates a ball screw 31 to position a movable part 32. The movable part 32 moves a table 33 in predetermined axial directions.

The spindle motor 24 rotates a spindle head 36 at a predetermined speed through gear mechanisms 34 and 35. A tool 37 such as a milling cutter is firmly attached to the spindle head 36 to machine a workpiece 38 fixed on the table 33.

According to this invention, a machining error of the machine tool can be evaluated while carrying out a dry run operation with the workpiece 38 removed from the table 33, i.e., without actually machining the workpiece 38.

Although in the above embodiment, a single processor is used, a multiprocessor system having a plurality of processors may alternatively be used, depending upon the system configuration.

[Effects of the Invention]

As described above, according to this invention, the machining accuracy can be easily evaluated without using a special device, and accordingly, servo parameters etc. can be adjusted without actually machining a workpiece by a machine tool connected to the numerical control device.

Brief Description of the Drawings

FIG. 1 is a flowchart showing an example of a process according to this invention;
FIG. 2 is a diagram showing an example of a radial error display obtained by a roundness measurement; and
FIG. 3 is a diagram of hardware of a numerical control device for carrying out this invention.

11 processor;
13 RAM;
14 nonvolatile memory;
14a machining program;
16a display device;
17 keyboard;
18 axis control circuit;
19 servo amplifier;
20 servomotor;
21 pulse coder.

Applicant for patent: FANUC LTD.
Agent: Kiyoshi HATTORI, patent attorney

FIG. 1

START
S1: COMMAND FOR CIRCULAR MACHINING IN XY PLANE
S2: READ U(i) & V(i)
S4: DISPLAY $\Delta$R(i)
END
Applicant: Fanuc Ltd.
Agent: Kiyoshi HATTORI, Patent Attorney

FIG. 3

14: NONVOLATILE MEMORY
14a: MACHINING PROGRAM
15a: SEQUENCE PROGRAM
17: KEYBOARD
18: AXIS CONTROL CIRCUIT
19: SERVO AMPLIFIER
20: SERVOMOTOR
21: PULSE CODER
22: SPINDLE CONTROL CIRCUIT
23: SPINDLE AMPLIFIER
25: INPUT/OUTPUT CIRCUIT
27: BUS
36: MANUAL PULSE GENERATOR
39: MACHINE CONTROL CIRCUIT
40: MACHINE OPERATOR'S PANEL

**Claims**

1. An accuracy evaluation method for a numerical control device which is executed to minimize an error of a machining operation of a machine in accordance with a numerical control command, characterized by comprising:

supplying a numerical control command to a machine tool connected to the numerical control device;

obtaining a machine position in accordance with a feedback signal from the machine tool;

obtaining an error between the machine position and a machine position specified by the numerical control command; and

evaluating an accuracy with respect to the numerical control command from the numerical control device.

2. The accuracy evaluation method for a numerical control device according to claim 1, characterized in that the numerical control command is output to the machine tool in accordance with a circular machining program stored in the numerical control device.

3. The accuracy evaluation method for a numerical control device according to claim 1, characterized in that a machine position during a dry run or during a machining operation is obtained in accordance with the feedback signal from the machine tool to obtain a measurement error with respect to the machine position specified by the numerical control command.

4. The accuracy evaluation method for a numerical control device according to claim 1, characterized in that the measurement error with respect to the machine position specified by the numerical control command is graphically displayed on a display screen for an operator's observation.

$$\boxed{\text{S T A R T}}$$

$$\downarrow$$

COMMAND FOR CIRCULAR
MACHINING IN XY PLANE — S1

$$\downarrow$$

READ U(i) & V(i) — S2

$$\downarrow$$

$$X(i) = X(i) + U(i)$$
$$Y(i) = Y(i) + V(i)$$
$$R(i) = \sqrt{X(i)^2 + Y(i)^2}$$
— S3

$$\downarrow$$

$$\triangle R(i) = Rc - R(i)$$ — S4

$$\downarrow$$

DISPLAY $\triangle R(i)$ — S5

$$\downarrow$$

$$\boxed{\text{E N D}}$$

F I G. 1

F I G. 2

F I G. 3

# INTERNATIONAL SEARCH REPORT

International Application No PCT/JP91/01485

## I. CLASSIFICATION OF SUBJECT MATTER (if several classification symbols apply, indicate all) ⁶

According to International Patent Classification (IPC) or to both National Classification and IPC

Int. Cl⁵  G05B19/405

## II. FIELDS SEARCHED

### Minimum Documentation Searched ⁷

| Classification System | Classification Symbols |
|---|---|
| IPC | G05B19/405, 19/18 |

### Documentation Searched other than Minimum Documentation to the Extent that such Documents are Included in the Fields Searched ⁸

| | |
|---|---|
| Jitsuyo Shinan Koho | 1926 – 1991 |
| Kokai Jitsuyo Shinan Koho | 1971 – 1991 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 01-57310 (Okuma Machinery Works, Ltd.), March 3, 1989 (03. 03. 89), Lines 16 to 19, lower right column, page 2, lines 3 to 6, lower right column, page 3 (Family: none) | 1-6 |
| Y | JP, A, 63-77638 (Toyoda Machine Works, Ltd.), April 7, 1988 (07. 04. 88), Line 12, lower right column, page 2 to line 3, upper left column, page 3 & EP, A1, 265607 & US, A, 4873793 | 1-6 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 23, 1992 (23. 01. 92) | February 18, 1992 (18. 02. 92) |

| International Searching Authority | Signature of Authorized Officer |
|---|---|
| Japanese Patent Office | |

Form PCT/ISA/210 (second sheet) (January 1985)